# EUROPEAN PATENT APPLICATION

(11) **EP 4 624 426 A1**
(43) Date of publication of application: **01.10.2025**
(21) Application number: 23894575.2
(22) Date of filing: 21.11.2023
(51) Int. Cl.: C02F 1/42, B01J 47/04, G06Q 10/04, G06Q 10/20

(54) **REPLACEMENT TIMING PREDICTION METHOD FOR ION EXCHANGE RESIN IN NON-REGENERATIVE ION EXCHANGE DEVICE**

(30) Priority: 22.11.2022 JP 2022186554
(71) Applicant: Kurita Water Industries Ltd., Tokyo 164-0001 (JP)
(72) Inventor: MINATO Yasuharu, Tokyo 164-0001 (JP); MIYAZAKI Yoichi, Tokyo 164-0001 (JP); KODA Tsukasa, Tokyo 164-0001 (JP)
(74) Representative: TBK
(86) International application number: PCT/JP2023/041744
(87) International publication number: WO 2024/111570

(57) **Abstract**

The present invention is a replacement timing prediction method for ion exchange resin charged in a non-regenerative ion exchange device constituting a sub-system of an ultrapure water manufacturing device of a specific user, using information processing means. **In** this replacement timing prediction method, a database is attached to the information processing means, and the replacement timing prediction method includes a step in which the database receives information related to an ion exchange resin charged in a non-regenerative ion exchange device of the specific user, and records the information received; and a step in which, based on the information recorded in the database, the information processing means predicts a next replacement timing of an ion exchange resin of a non-regenerative ion exchange device of the specific user. According to such a replacement timing prediction method for ion exchange resin, the replacement of ion exchange resin charged in the non-regenerative ion exchange device of the specific user may be appropriately managed.

## Description

### Technical Field

The present invention relates to a replacement timing prediction method for ion exchange resin charged in a non-regenerative ion exchange device, and particularly relates to a replacement timing prediction method for ion exchange resin that can accurately manage the replacement of charged ion exchange resin, especially replacement with regenerated ion exchange resin.

### Related Art

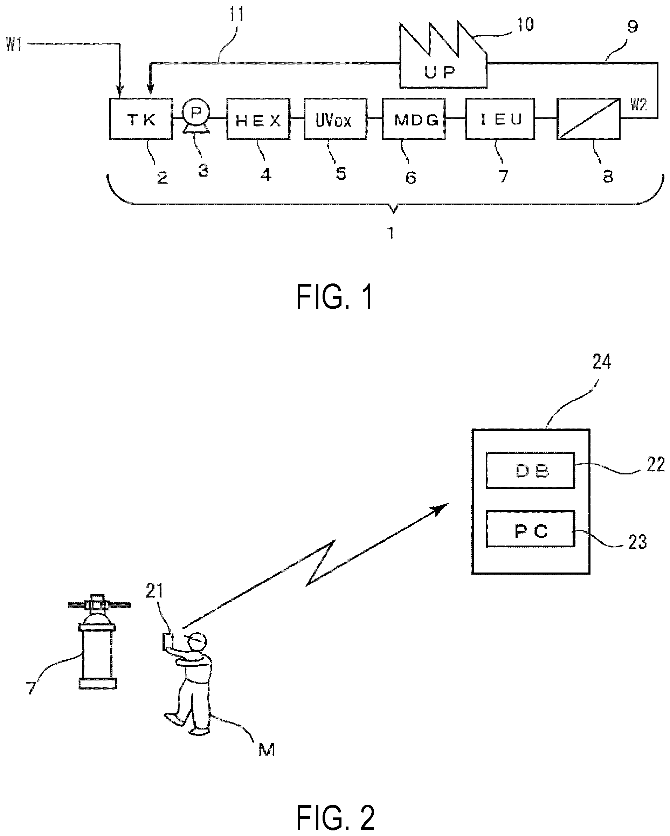

Ultrapure water mainly used in the electronic field is manufactured by treating raw water in an ultrapure water manufacturing system consisting of a pretreatment device, a primary pure water manufacturing device, and a secondary pure water manufacturing device (sub-system). For example, as shown in FIG. 1, the sub-system 1 includes a subtank 2 for storing primary pure water W1, a liquid delivery pump 3 for delivering the primary pure water W1 from this subtank 2, a heat exchanger 4 for recovering heat from the primary pure water W1, an ultraviolet oxidation device 5 for decomposing organic matter in the primary pure water W1, a membrane degassing device 6, a non-regenerative ion exchange device 7, and an ultrafiltration (UF) membrane 8 as a membrane separation device. The secondary pure water (ultrapure water) W2 manufactured in such a sub-system 1 is supplied to a use point 10 through a supply path 9, and the ultrapure water W2 that was not used returns to the subtank 2 through a return path 11. The non-regenerative ion exchange device 7 used in this sub-system 1 has a limited lifespan and its performance decreases after exchanging a predetermined amount of ions. Thus, periodic replacement and maintenance of the non-regenerative ion exchange device 7 are necessary.

This non-regenerative ion exchange device 7 can recover its performance by removing the used ion exchange resin and charging it with new or regenerated ion exchange resin.

### SUMMARY OF INVENTION

### Technical Problem

However, the non-regenerative ion exchange device 7 is normally charged with mixed resin of anion exchange resin and cation resin as ion exchange resin, but these anion exchange resin and cation resin exist in various grades due to differences in ion exchange groups, differences in base materials, or differences in ion exchange capacity. Furthermore, the charging amount of ion exchange resin and the ratio of anion exchange resin/cation exchange resin may differ depending on the treated water quality and required water quality (guaranteed water quality) of customers using the non-regenerative ion exchange device 7. As a result, since the ion exchange resin for replacement differs for each user's ultrapure water manufacturing system, replacing the ion exchange resin of the non-regenerative ion exchange device 7 in multiple users' ultrapure water manufacturing systems is very time-consuming, and it is difficult to manage efficiently.

In recent years, especially from the perspective of environmental load, there is a demand to reduce the disposal amount of ion exchange resin, and regeneration and reuse of ion exchange resin is being practiced. However, the optimal regeneration process for ion exchange resin differs depending on the ion exchange resin, and losses associated with the regeneration of ion exchange resin are unavoidable, making it necessary to replenish the inevitably discarded ion exchange resin portion with new ion exchange resin. In this case, the ratio of how much regenerated ion exchange resin to reuse and how much new ion exchange resin to replenish also differs according to the required water quality of the user's ultrapure water manufacturing system.

In this way, conventionally, it was difficult to manage the replacement of ion exchange resin charged in non-regenerative ion exchange devices for each specific ultrapure water manufacturing system of a specific user. If it were possible to accurately replace the regenerated ion exchange resin in the non-regenerative ion exchange device, waste ion exchange resin could be significantly reduced, which would be desirable from the perspective of environmental load.

The present invention has been made in view of the above issues, and aims to provide a replacement timing prediction method for ion exchange resin in a non-regenerative ion exchange device that enables appropriate management of the replacement of ion exchange resin charged in the non-regenerative ion exchange device for each ultrapure water manufacturing system of a specific user, particularly replacement with regenerated ion exchange resin.

### Solution to Problem

To solve the above issues, the present invention provides a replacement timing prediction method for ion exchange resin in a non-regenerative ion exchange device constituting a sub-system of an ultrapure water manufacturing device of a specific user, using information processing means. A database is attached to the information processing means, and the replacement timing prediction method for ion exchange resin charged in the non-regenerative ion exchange device includes: a step in which the database receives information related to an ion exchange resin charged in a non-regenerative ion exchange device of the specific user, and records the information received; and a step in which, based on the information recorded in the database, the information processing means predicts a next replacement timing of an ion exchange resin of a non-regenerative ion exchange device of the specific user. Information related to the ion exchange resin includes (1) to (4) below:
(1) information related to a grade (type) of anion exchange resin and cation exchange resin charged in the non-regenerative ion exchange device,
(2) a charging amount of ion exchange resin charged in the non-regenerative ion exchange device,
(3) a ratio of anion exchange resin and cation exchange resin charged in the non-regenerative ion exchange device, and
(4) an immediately preceding replacement timing of the ion exchange resin (Invention 1).

According to the above invention (Invention 1), based on information about the ion exchange resin of the non-regenerative ion exchange device of the specific user, that is, information including (1) to (4) below, it is possible to predict the next replacement timing of the ion exchange resin of the non-regenerative ion exchange device.

In the above invention (Invention 1), it is preferable that the method further includes a step in which the information processing means instructs replacement of the ion exchange resin of the non-regenerative ion exchange device based on the replacement timing predicted (Invention 2).

According to the above invention (Invention 2), by identifying anion exchange resin and cation exchange resin that meet the conditions, preparing a predetermined amount of anion exchange resin and cation exchange resin that meet the conditions in advance in response to the replacement timing predicted, and supplying them to the specific user, it is possible to appropriately manage the replacement of ion exchange resin in the non-regenerative ion exchange device.

In the above invention (Invention 2), it is preferable that the information further includes (5) below:
(5) a selection between using all new resin or mainly regenerated resin as an ion exchange resin for replacement (Invention 3).

According to the above invention (Invention 3), depending on whether the specific user selects new resin or regenerated resin as the ion exchange resin for the non-regenerative ion exchange device to be replaced, it becomes possible to prepare new or regenerated anion exchange resin and cation exchange resin that meet the conditions for the next ion exchange resin replacement timing. It is noted that in the case where regenerated resin are selected, since there will be losses associated with regeneration, it is sufficient to replenish that portion with new anion exchange resin and cation exchange resin or previously remaining regenerated resin.

In the above invention (Invention 3), it is preferable that the information further includes (6) below:
(6) guaranteed water quality information of an ultrapure water manufacturing device of the specific user (Invention 4).

According to the above invention (Invention 4), it becomes possible to predict the replacement timing of ion exchange resin so as to meet the guaranteed water quality (required water quality) of the ultrapure water manufacturing device of the specific user, and to prepare anion exchange resin and cation exchange resin for replacement to match these predicted conditions.

In the above invention (Invention 3), it is preferable that the ion exchange resin for which the information processing means instructs replacement is all new ion exchange resin, and the replacement timing prediction method further includes a step in which the information processing means instructs preparation of new ion exchange resin in response to a prediction of a next replacement timing of an ion exchange resin of a non-regenerative ion exchange device of the specific user by the information processing means (Invention 5).

According to the above invention (Invention 5), in cases where the specific user desires new resin at the time of replacement or where new ion exchange resin needs to be used based on the required water quality, the next replacement timing may be predicted from the immediately preceding replacement timing of the ion exchange resin of the non-regenerative ion exchange device, the water treatment volume of the ion exchange resin, and the charging amount. By preparing a predetermined amount of new anion exchange resin and cation exchange resin of a predetermined grade in advance according to this replacement timing predicted and supplying them to the user, the replacement of ion exchange resin in the non-regenerative ion exchange device may be appropriately managed.

In the above invention (Invention 3), it is preferable that the ion exchange resin for which the information processing means instructs replacement is mainly regenerated resin, and the replacement timing prediction method further includes a step in which the information processing means instructs preparation of regenerated ion exchange resin that has been regenerated from an ion exchange resin recovered from a non-regenerative ion exchange device of the specific user in response to a prediction of a next replacement timing of an ion exchange resin of a non-regenerative ion exchange device of the specific user (Invention 6).

According to the above invention (Invention 6), in cases where a specific user desires regenerated resin at the time of replacing the ion exchange resin of the non-regenerative ion exchange device, the next replacement timing may be predicted from the immediately preceding replacement timing of the ion exchange resin of the non-regenerative ion exchange device, the water treatment volume of the ion exchange resin, and the charging amount. By regenerating the anion exchange resin and cation exchange resin recovered from the non-regenerative ion exchange device by a predetermined method according to this predicted next replacement timing and supplying them to the user, the replacement of regenerated ion exchange resin may be appropriately managed.

In the above invention (Invention 6), it is preferable that an ion exchange resin that is mainly regenerated resin is one in which new ion exchange resin has been replenished to regenerated ion exchange resin (Invention 7).

According to the above invention (Invention 7), when regenerating ion exchange resin recovered from the specific user's non-regenerative ion exchange device, losses occur due to damage to the ion exchange resin or entanglement of ion exchange resin at the interface when separating anion exchange resin and cation exchange resin. As a result, the amount of reusable ion exchange resin becomes less than the recovered amount. By replenishing this decreased amount of ion exchange resin with new ion exchange resin based on information related to the ion exchange resin, the replacement of ion exchange resin in the non-regenerative ion exchange device may be appropriately managed.

In the above invention (Invention 2), it is preferable that an information identifier recording information related to an ion exchange resin charged in a non-regenerative ion exchange device of the specific user is attached to the non-regenerative ion exchange device, and when replacing the ion exchange resin, by recognizing the information identifier with a reading means, the information (4) is linked with the information (1), (2) and (3) (Invention 8).

According to the above invention (Invention 8), by attaching an information identifier such as a barcode or QR code (registered trademark) to the non-regenerative ion exchange device, and assigning information such as the estimated water treatment volume per unit time at the time of designing the ion exchange resin of the non-regenerative ion exchange device of the specific user, the charging amount of ion exchange resin, the ratio of anion exchange resin to cation exchange resin, and the grades of anion exchange resin and cation exchange resin to this information identifier, and by reading the information identifier at the time of ion exchange resin replacement, the replacement timing of the ion exchange resin may be identified. By storing and managing this information in a database, and through information processing means linked to this database, not only the immediately preceding replacement timing of the ion exchange resin but also by linking with information about the ion exchange resin of the non-regenerative ion exchange device such as the grade and amount of ion exchange resin, or regeneration method of the recovered ion exchange resin, the next replacement of ion exchange resin in the non-regenerative ion exchange device may be appropriately managed.

In the above invention (Invention 2), it is preferable that a water quality of treated water of the non-regenerative ion exchange device is measurable by a measurement means to which a wireless information transmission means is attached, and the replacement timing prediction method further includes: a step in which the database receives water quality information of treated water of the non-regenerative ion exchange device from the measurement means via the wireless information transmission means, and records the information received; and a step in which the information processing means corrects a next replacement timing of the ion exchange resin based on water quality information of treated water measured by the measurement means (Invention 9).

According to the above invention (Invention 9), by continuously or intermittently measuring the water quality of the treated water from the non-regenerative ion exchange device, and transmitting this information to a remote database and information processing means through wireless information transmission means, the information processing means may optimally correct the next replacement timing of the ion exchange resin in response to the water quality of the non-regenerative ion exchange device, and the replacement of ion exchange resin in the non-regenerative ion exchange device of the specific user may be appropriately managed.

In the above invention (Invention 2), it is preferable that a charging resin height of an ion exchange resin of the non-regenerative ion exchange device is measurable by an optical sensor to which a wireless information transmission means is attached, and the replacement timing prediction method further includes: a step in which the database receives charging resin height information of the ion exchange resin from the optical sensor via a wireless information transmission means, and records the information received; and a step in which the information processing means corrects a next replacement timing of the ion exchange resin based on charging resin height information of an ion exchange device measured by the optical sensor (Invention 10).

According to the above invention (Invention 10), the ion exchange resin charged in the non-regenerative ion exchange device increases or decreases in particle size with ion exchange, so the charging height of the resin also increases or decreases. By continuously or intermittently measuring the charging height of the resin in the non-regenerative ion exchange device using an optical sensor, and transmitting this information to a remote database and information processing means through wireless information transmission means, the information processing means may optimally correct the replacement timing of the ion exchange resin in response to the usage status (ion exchange situation) of the non-regenerative ion exchange device, and the replacement of ion exchange resin in the non-regenerative ion exchange device of the specific user may be appropriately managed.

In the above invention (Invention 2), it is preferable that a color of the ion exchange resin is measurable by a color sensor to which a wireless information transmission means is attached, and the replacement timing prediction method further includes: a step in which the database receives color information of the ion exchange resin measured by the color sensor from the measurement means via the wireless information transmission means, and records the information received; and a step in which the information processing means corrects a next replacement timing of an ion exchange resin of a non-regenerative ion exchange device of the specific user based on color information of an ion exchange resin measured by the color sensor (Invention 11).

According to the above invention (Invention 11), the ion exchange resin charged in the non-regenerative ion exchange device becomes either lighter or darker in color with ion exchange. By transmitting the information measured by the color sensor regarding the color of this ion exchange resin to a remote database and information processing means through wireless information transmission means, the information processing means may optimally correct the replacement timing of the ion exchange resin in response to the usage status (ion exchange situation) of the non-regenerative ion exchange device, and the replacement of ion exchange resin in the non-regenerative ion exchange device of the specific user may be appropriately managed.

### BRIEF DESCRIPTION OF DRAWINGS

[FIG. 1] is a schematic diagram showing a sub-system of an ultrapure water manufacturing device to which a replacement timing prediction method for ion exchange resin in a non-regenerative ion exchange device according to one embodiment of the present invention may be applied.
[FIG. 2] is a schematic diagram showing an application example of the replacement timing prediction method for ion exchange resin in the non-regenerative ion exchange device of the embodiment.
[FIG. 3] is a flow diagram showing the process of the replacement timing prediction method for ion exchange resin in the non-regenerative ion exchange device of the embodiment.

### DESCRIPTION OF EMBODIMENTS

### [First embodiment]

Hereinafter, a first embodiment of the replacement timing prediction method for ion exchange resin in the non-regenerative ion exchange device of the present invention is described in detail with reference to the attached drawings.

The replacement timing prediction method for ion exchange resin in the non-regenerative ion exchange device of this embodiment is a method for predicting, using an information processing means, the replacement timing of ion exchange resin charged in a non-regenerative ion exchange device that constitutes a sub-system of an ultrapure water manufacturing device of a user (hereinafter simply referred to as a "specific user") who has installed the ultrapure water manufacturing device. This information processing means has a database attached to it.

### (Sub-system)

For the secondary pure water manufacturing device (sub-system) of the ultrapure water manufacturing device to which the replacement timing prediction method for ion exchange resin of this embodiment may be applied, the structure shown in FIG. 1 described above may be used, so a detailed description thereof is omitted.

### (Non-regenerative ion exchange device)

In this embodiment, the non-regenerative ion exchange device 7 is generally charged with a mixture of anion exchange resin and cation exchange resin, and after a predetermined amount or predetermined time of water to be treated has passed through, either the entire non-regenerative ion exchange device 7 is replaced, or the ion exchange resin charged in the non-regenerative ion exchange device 7 is replaced with new or regenerated ion exchange resin. This embodiment is applied not to the case where the entire non-regenerative ion exchange device 7 is replaced, but to the case where the ion exchange resin charged in the non-regenerative ion exchange device 7 is replaced with new or regenerated ion exchange resin.

In this embodiment, an information identifier is assigned to this non-regenerative ion exchange device 7. As this information identifier, a barcode or QR code (registered trademark) or other two-dimensional code is preferable. This information identifier has the following information (1) to (3) recorded as information of the non-regenerative ion exchange device 7 of the specific user:
(1) information related to the grade of anion exchange resin and cation exchange resin charged in the non-regenerative ion exchange device 7 (management number at the time of manufacturing the ion exchange resin, brand of ion exchange resin, etc.),
(2) charging of ion exchange resin, and
(3) a ratio of anion exchange resin and cation exchange resin charged in the non-regenerative ion exchange device 7 (anion exchange resin/cation exchange resin).
In addition, information on the estimated water treatment volume per unit time (standard water treatment volume) at the time of designing the non-regenerative ion exchange device 7 may be recorded.

Further, for example, by recognizing this information identifier at the time of replacing the ion exchange resin, the time of this recognition may be linked as (4) the immediately preceding replacement timing of the ion exchange resin of the non-regenerative ion exchange device 7. Furthermore, the information identifier may have other information such as the following (5) to (6) recorded:
(5) a selection between using all new resin or mainly regenerated resin as ion exchange resin for replacement, and
(6) guaranteed water quality information of the ultrapure water manufacturing device of the specific user.
Here, the information in (5) includes not only the preference of a specific user, but also cases where all must be replaced with new resin or where it is desirable to replace all with new resin, based on the guaranteed water quality (required water quality) of the ultrapure water manufacturing device of a specific user.

### (Replacement timing prediction method for ion exchange resin)

Next, the replacement timing prediction method for ion exchange resin in this embodiment in the non-regenerative ion exchange device 7 having the configuration as described above is described.

### <Information recording step>

First, a database 22 attached to an information processing means 23 such as a personal computer receives information related to ion exchange resin charged in the non-regenerative ion exchange device 7 of a specific user, and records the information received. The above information includes (1) to (4) below:
(1) information related to the grade of anion exchange resin and cation exchange resin charged in the non-regenerative ion exchange device 7 (management number at the time of manufacturing the ion exchange resin, brand of ion exchange resin, etc.),
(2) charging of ion exchange resin,
(3) a ratio of anion exchange resin and cation exchange resin charged in the non-regenerative ion exchange device 7 (anion exchange resin/cation exchange resin), and
(4) an immediately preceding replacement timing of ion exchange resin in the non-regenerative ion exchange device 7.
Furthermore, the estimated water treatment volume per unit time (standard water treatment volume) at the time of designing the non-regenerative ion exchange device 7 may be included as information.

### <Next replacement timing prediction step>

Then, based on the information recorded in the database 22, the information processing means 23 predicts the next replacement timing of ion exchange resin in the non-regenerative ion exchange device 7 for the specific user. Specifically, after the replacement of ion exchange resin in the non-regenerative ion exchange device 7 is completed, as shown in FIG. 2, the operator M reads an information identifier (not shown) such as a barcode attached to the non-regenerative ion exchange device 7 using a portable terminal 21 such as a smartphone. This read information includes at least information (1) to (4) as mentioned above. By reading this information identifier with the portable terminal 21 at the time of completing the ion exchange resin replacement, the time of this reading may be linked to information (1) to (3) as (4) the immediately preceding replacement timing of ion exchange resin in the non-regenerative ion exchange device 7. Then, this information is transmitted from the portable terminal 21 to a remote management facility 24 equipped with information processing means 23 such as a personal computer with a database 22 attached. The database 22 receives this information and records the information received.

Then, the information processing means 23 estimates the next replacement timing of ion exchange resin based on the information recorded in the database 22, including: (1) a charging amount of ion exchange resin, (2) anion exchange resin/cation exchange resin (volume ratio), (3) information related to the grade of anion exchange resin and cation exchange resin charged in the non-regenerative ion exchange device 7 (management number at the time of manufacturing the ion exchange resin, brand of ion exchange resin, etc.), (4) immediately preceding replacement timing of ion exchange resin in the non-regenerative ion exchange device 7, and additionally, if necessary, the estimated water treatment volume (standard water treatment volume) at the time of designing the non-regenerative ion exchange device 7.

For example, the information processing means 23 calculates the charging amount A (L) of anion exchange resin and the charging amount B (L) of cation exchange resin from (i) the charging amount of ion exchange resin and (ii) the anion exchange resin/cation exchange resin ratio, and calculates the ion exchange capacity per unit volume or unit mass (anion exchange capacity, cation exchange capacity) of each ion exchange resin from (iii) the grade of anion exchange resin and cation exchange resin charged in the ion exchange device 7.

Next, the information processing means 23 calculates the anion load and cation load per unit time from the anion load and cation load per unit water volume in the estimated water quality of the primary pure water W1 and the estimated water treatment volume (standard water treatment volume) per unit time at the time of designing the non-regenerative ion exchange device 7. The anion exchange capacity is divided by the anion load per unit time, and the cation exchange capacity is divided by the cation load, to calculate the breakthrough prediction times of the anion exchange resin and the cation exchange resin, respectively. Then, by dividing the shorter breakthrough prediction time by the average daily operating time of the sub-system 1, the number of days until the ion exchange resin breaks through (breakthrough prediction days) is estimated. Furthermore, the information processing means 23 may predict the next replacement timing based on the number of days calculated by multiplying this estimated number of days until breakthrough by a safety factor (e.g., approximately 0.8 to 0.9) to prevent ion leakage from the non-regenerative ion exchange device 7.

However, the non-regenerative ion exchange device 7 processes primary pure water W1, and the ion load of primary pure water W1 is extremely small compared to pre-treated water, so the breakthrough prediction days may be very large, sometimes exceeding 800 days, particularly more than 1000 days. Managing with such a long-term period is not practical considering the maintenance and renewal of customer equipment. Thus, it is preferable to set an upper limit for the breakthrough prediction days, for example, setting an upper limit of 2 years or 3 years, and managing the replacement of the non-regenerative ion exchange device 7 accordingly, which makes customer management easier.

In addition, the information identifier may include the following information (5) and (6) as needed. This information is for identifying the ion exchange resin to be prepared in advance at the next replacement timing of the ion exchange resin.
(5) A selection between using all new resin or mainly regenerated resin as ion exchange resin for replacement.
(6) Guaranteed water quality information of the ultrapure water manufacturing device of the specific user.

### <Ion exchange resin replacement timing instruction step>

In response to this predicted next replacement timing, the information processing means 23 instructs that the replacement timing of the ion exchange resin is approaching by displaying it on a display means such as a display (not shown).

Then, based on the information related to the non-regenerative ion exchange device 7 of the specific user recorded in the information processing means 23, a specific grade and amount of ion exchange resin for replacement may be prepared and delivered in advance. According to this method, by reading the information identifier of the non-regenerative ion exchange device 7, the operator M may confirm the information of the non-regenerative ion exchange device 7 and compare it with the delivered ion exchange resin, thereby preventing accidental replacement with different ion exchange resin, which also has the effect of eliminating the need for skilled operators M.

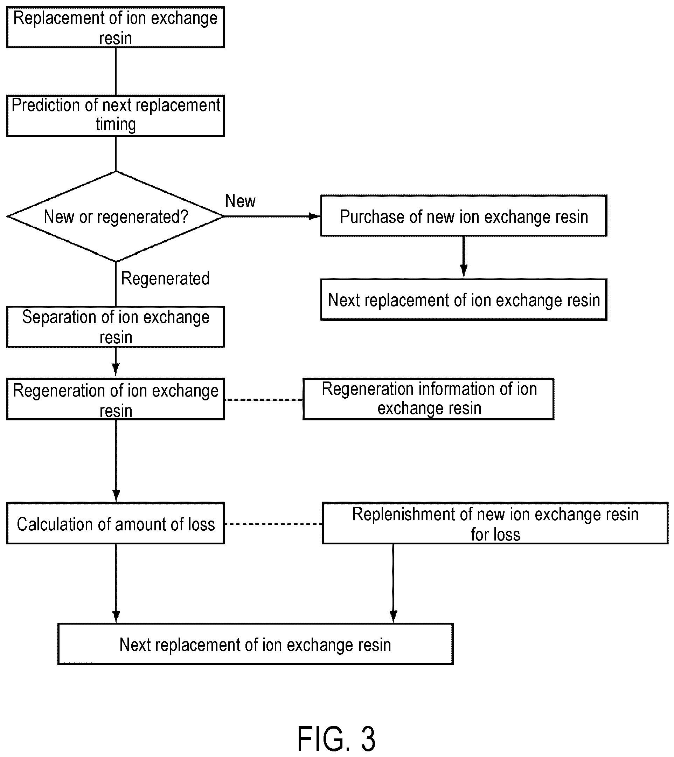

Specifically, the determination may be made according to the flow shown in FIG. 3. That is, after predicting the next replacement timing of the ion exchange resin, first, based on the condition of whether new resin or regenerated resin has been selected as the ion exchange resin for replacement in the non-regenerative ion exchange device 7 of the specific user who owns the ultrapure water manufacturing device, it is determined whether the ion exchange resin to be prepared is new or regenerated.

### <New ion exchange resin preparation instruction step>

Then, in the case where replacement with new anion exchange resin and cation exchange resin is selected, the information processing means 23 confirms in advance, taking into consideration the replacement timing of the ion exchange resin, based on the information on the amount of anion exchange resin and cation exchange resin of the same grade as that which was originally charged, and if there is a shortage, displays this on a display or the like and provide instructions to purchase more ion exchange resin to ensure that the required amount is reached by the replacement timing. Then, the ion exchange resin of the non-regenerative ion exchange device 7 may be replaced with new anion exchange resin and cation exchange resin.

### <Regenerated ion exchange resin preparation instruction step>

On the other hand, in the case where replacement mainly with regenerated anion exchange resin and cation exchange resin is selected, the ion exchange resin recovered from the non-regenerative ion exchange device 7 of the specific user is taken back, and the anion exchange resin and cation exchange resin are separated in a separation process at the regeneration factory, followed by regeneration by applying a regeneration process according to the grade of the ion exchange resin recorded in the information processing means 23. It is noted that these separation and regeneration processes may be performed at the regeneration factory after recovery from the non-regenerative ion exchange device 7, or regeneration may be performed on-site by placing a regeneration device at the installation location of the ultrapure water manufacturing device during the replacement of the ion exchange resin of the non-regenerative ion exchange device 7.

At this time, when regenerating the ion exchange resin recovered from the non-regenerative ion exchange device 7, losses occur due to damage to the ion exchange resin associated with use, damage to the ion exchange resin caused by swelling and shrinkage of the ion exchange resin, and entanglement of the ion exchange resin at the interface when separating the anion exchange resin and cation exchange resin. As the amount of usable regenerated ion exchange resin becomes less than the recovered amount, the replacement of the ion exchange resin in the non-regenerative ion exchange device 7 may be appropriately managed by calculating this loss amount and replenishing it with new ion exchange resin. The new anion exchange resin and cation exchange resin used for replenishment may be placed on the downstream side (the lower side in the case of downward flow) of the non-regenerative ion exchange device 7, thereby maintaining good water quality of the treated water from the non-regenerative ion exchange device 7. It is noted that the amount of new anion exchange resin and cation exchange resin to be replenished may be 40% or less, particularly about 30% or less. This allows minimizing the disposal amount of ion exchange resin in the non-regenerative ion exchange device 7.

In the case of replenishing this shortage with new ion exchange resin, the mixing ratio of regenerated ion exchange resin and new ion exchange resin may be adjusted to more than the loss of ion exchange resin according to the user's required water quality (guaranteed water quality). This regenerated/new ratio may also be recorded in the database 22 as information specific to the user, and delivered to the specific user in response to the next replacement timing. Furthermore, the regenerated/new ratio may be changed according to the number of regeneration cycles of the ion exchange resin.

### [Second embodiment]

Next, the second embodiment of the present invention is described. In the second embodiment, in the sub-system 1 shown in FIG. 1, a specific resistance meter as a water quality measurement means is provided downstream of the non-regenerative ion exchange device 7. The database 22 receives information on the measured value of this specific resistance meter, that is, the specific resistance value of the water treatment volume of the non-regenerative ion exchange device 7, through wireless information transmission means, and records the information received (information recording step). Based on the information recorded in the database 22, the information processing means 23 may correct the next replacement timing of the ion exchange resin together with the information of the information identifier of the non-regenerative ion exchange device 7 (replacement timing correction step).

Specifically, it is monitored that whether the specific resistance value falls below 18.2MΩ·cm, and in the case where the downward trend continues for a predetermined period (e.g., about 1 to 3 days) so as to approximate 18.2MΩ·cm, the next replacement timing of the ion exchange resin is corrected to be shortened, and by performing the "ion exchange resin preparation instruction step," it is possible to manage so that the specific resistance value does not fall below 18.2MΩ·cm.

According to this embodiment, the specific resistance value of the water to be treated by the non-regenerative ion exchange device 7 and the initial replacement timing of the ion exchange resin may be optimally corrected. This makes it possible to suitably remotely manage the replacement of ion exchange resin in the non-regenerative ion exchange device for a specific user. Moreover, it becomes possible to reduce the disposal amount of ion exchange resin.

### [Third embodiment]

Next, the third embodiment of the present invention is described. In the third embodiment, in the sub-system 1 shown in FIG. 1, the non-regenerative ion exchange device 7 is provided with an optical sensor that measures the charging resin height of the ion exchange resin. The database 22 receives the charging resin height information measured by this optical sensor through wireless information transmission means, and records the information received (information recording step). Since the ion exchange resin expands or contracts in volume in response to ion exchange, the charging resin height of the ion exchange resin changes. Thus, based on the information recorded in the database 22, the information processing means 23 may correct the next replacement timing of the ion exchange resin together with the information of the information identifier if the displacement of the height of the ion exchange resin exceeds a predetermined value (replacement timing correction step).

According to this embodiment, it is possible to estimate the time until breakthrough of the ion exchange resin in the non-regenerative ion exchange device 7 based on the charging resin height of the non-regenerative ion exchange device 7, and by comparing it with the initially predicted time until breakthrough, the predicted value of the replacement timing of the ion exchange resin may be optimally corrected. This makes it possible to optimally correct the replacement timing of the ion exchange resin based on the temporal change in the charging resin height of the ion exchange resin in the non-regenerative ion exchange device 7, thereby enabling suitable remote management of the replacement of ion exchange resin in the non-regenerative ion exchange device for a specific user. Moreover, it becomes possible to reduce the disposal amount of ion exchange resin.

### [Fourth embodiment]

Furthermore, the fourth embodiment of the present invention is described. In the fourth embodiment, in the sub-system 1 shown in FIG. 1, the non-regenerative ion exchange device 7 is provided with a color sensor that measures the color of the ion exchange resin. The database 22 receives the color information of the ion exchange resin measured by this color sensor through wireless information transmission means, and records the information received (information recording step). The ion exchange resin changes color in response to ion exchange. Thus, based on the information recorded in the database 22, the information processing means 23 may correct the next replacement timing of the ion exchange resin together with the information of the information identifier if the color of the ion exchange resin changes from a predetermined level (replacement timing correction step).

According to this embodiment, it is possible to estimate the time until breakthrough of the ion exchange resin in the non-regenerative ion exchange device 7 based on the color of the ion exchange resin in the non-regenerative ion exchange device 7, and by comparing it with the initially predicted time until breakthrough, the predicted value of the replacement timing of the ion exchange resin may be optimally corrected. This makes it possible to optimally correct the replacement timing of the ion exchange resin based on the temporal change in the color of the ion exchange resin in the non-regenerative ion exchange device 7, thereby enabling suitable remote management of the replacement of ion exchange resin in the non-regenerative ion exchange device for a specific user. Moreover, it becomes possible to reduce the disposal amount of ion exchange resin.

The replacement timing prediction method for ion exchange resin in the non-regenerative ion exchange device of the present invention exemplified in each embodiment described above may be executed based on the request of the user by proposing the replacement timing of the ion exchange resin to a specific user each time, but it may be particularly suitably applied in cases where a contractor responsible for replacing the ion exchange resin comprehensively or individually undertakes the maintenance of the ultrapure water manufacturing device of a specific user and regularly performs it as maintenance.

The present invention has been described above based on the aforementioned embodiment with reference to the accompanying drawings, but the present invention is not limited to the above embodiment, and various modifications are possible. Since the feature of the present invention is to appropriately manage the replacement timing of non-regenerative ion exchange devices 7 for multiple specific customers remotely, for example, although an information identifier such as a barcode is assigned to the non-regenerative ion exchange device 7, it is not necessarily required to assign an information identifier, and customer information may be input into the database 22 in advance, and the immediately preceding replacement timing may also be manually entered by the operator M. In addition, the sub-system 1 is not limited to the configuration shown in FIG. 1, and may be applied to various configurations as long as it includes a non-regenerative ion exchange device 7.

### Reference Signs List

1 Sub-system
2 Subtank
3 Liquid delivery pump
4 Heat exchanger
5 Ultraviolet oxidation device
6 Membrane degassing device
7 Non-regenerative ion exchange device
8 Ultrafiltration (UF) membrane (membrane separation device)
9 Supply path
10 Use point
11 Ultrapure water
21 Portable terminal
22 Database
23 Information processing means
24 Management facility
W1 Primary pure water
W2 Secondary pure water (ultrapure water)
M Operator

## Claims

1. A replacement timing prediction method for ion exchange resin in a non-regenerative ion exchange device constituting a sub-system of an ultrapure water manufacturing device of a specific user, using information processing means,
wherein a database is attached to the information processing means, and the replacement timing prediction method for ion exchange resin charged in the non-regenerative ion exchange device comprises:
a step in which the database receives information related to an ion exchange resin charged in a non-regenerative ion exchange device of the specific user, and records the information received; and
a step in which, based on the information recorded in the database, the information processing means predicts a next replacement timing of an ion exchange resin of a non-regenerative ion exchange device of the specific user,
wherein information related to the ion exchange resin comprises (1) to (4) below:
(1) information related to a grade (type) of anion exchange resin and cation exchange resin charged in the non-regenerative ion exchange device,
(2) a charging amount of ion exchange resin charged in the non-regenerative ion exchange device,
(3) a ratio of anion exchange resin and cation exchange resin charged in the non-regenerative ion exchange device, and
(4) an immediately preceding replacement timing of the ion exchange resin.

2. The replacement timing prediction method for ion exchange resin in the non-regenerative ion exchange device according to claim 1, further comprising a step in which the information processing means instructs replacement of the ion exchange resin of the non-regenerative ion exchange device based on the replacement timing predicted.

3. The replacement timing prediction method for ion exchange resin in the non-regenerative ion exchange device according to claim 2, wherein the information further comprises (5) below:
(5) a selection between using all new resin or mainly regenerated resin as an ion exchange resin for replacement.

4. The replacement timing prediction method for ion exchange resin in the non-regenerative ion exchange device according to claim 3, wherein the information further comprises (6) below:
(6) guaranteed water quality information of an ultrapure water manufacturing device of the specific user.

5. The replacement timing prediction method for ion exchange resin in the non-regenerative ion exchange device according to claim 3, wherein the ion exchange resin for which the information processing means instructs replacement is all new ion exchange resin, and the replacement timing prediction method further comprises a step in which the information processing means instructs preparation of new ion exchange resin in response to a prediction of a next replacement timing of an ion exchange resin of a non-regenerative ion exchange device of the specific user by the information processing means.

6. The replacement timing prediction method for ion exchange resin in the non-regenerative ion exchange device according to claim 3, wherein the ion exchange resin for which the information processing means instructs replacement is mainly regenerated resin, and the replacement timing prediction method further comprises a step in which the information processing means instructs preparation of regenerated ion exchange resin that has been regenerated from an ion exchange resin recovered from a non-regenerative ion exchange device of the specific user in response to a prediction of a next replacement timing of an ion exchange resin of a non-regenerative ion exchange device of the specific user.

7. The replacement timing prediction method for ion exchange resin in the non-regenerative ion exchange device according to claim 6, wherein an ion exchange resin that is mainly regenerated resin is one in which new ion exchange resin has been replenished to regenerated ion exchange resin.

8. The replacement timing prediction method for ion exchange resin in the non-regenerative ion exchange device according to claim 2, wherein an information identifier recording information related to an ion exchange resin charged in a non-regenerative ion exchange device of the specific user is attached to the non-regenerative ion exchange device, and when replacing the ion exchange resin, by recognizing the information identifier with a reading means, the information (4) is linked with the information (1), (2) and (3).

9. The replacement timing prediction method for ion exchange resin in the non-regenerative ion exchange device according to claim 2, wherein a water quality of treated water of the non-regenerative ion exchange device is measurable by a measurement means to which a wireless information transmission means is attached, and the replacement timing prediction method further comprises:
a step in which the database receives water quality information of treated water of the non-regenerative ion exchange device from the measurement means via the wireless information transmission means, and records the information received; and
a step in which the information processing means corrects a next replacement timing of the ion exchange resin based on water quality information of treated water measured by the measurement means.

10. The replacement timing prediction method for ion exchange resin in the non-regenerative ion exchange device according to claim 2, wherein a charging resin height of an ion exchange resin of the non-regenerative ion exchange device is measurable by an optical sensor to which a wireless information transmission means is attached, and the replacement timing prediction method further comprises:
a step in which the database receives charging resin height information of the ion exchange resin from the optical sensor via a wireless information transmission means, and records the information received; and
a step in which the information processing means corrects a next replacement timing of the ion exchange resin based on charging resin height information of an ion exchange device measured by the optical sensor.

11. The replacement timing prediction method for ion exchange resin in the non-regenerative ion exchange device according to claim 2, wherein a color of the ion exchange resin is measurable by a color sensor to which a wireless information transmission means is attached, and the replacement timing prediction method further comprises:
a step in which the database receives color information of the ion exchange resin measured by the color sensor from the measurement means via the wireless information transmission means, and records the information received; and
a step in which the information processing means corrects a next replacement timing of an ion exchange resin of a non-regenerative ion exchange device of the specific user based on color information of an ion exchange resin measured by the color sensor.
